# FASCICULE DE BREVET EUROPEEN

(11) **EP 1 252 121 B1**
(45) Date de publication et mention de la délivrance du brevet: **26.05.2004**
(21) Numéro de dépôt: 01907702.3
(22) Date de dépôt: 25.01.2001
(51) Int. Cl.: C04B 35/536, C04B 38/06

(54) **MATERIAU COMPOSITE COMPRENANT DU CHARBON ACTIF ET DU GRAPHITE EXPANSE**
AKTIVKOHLE UND EXPANDIERTEN GRAPHIT ENTHALTENDES KOMPOSITMATERIAL
COMPOSITE MATERIAL COMPRISING ACTIVATED CARBON AND EXPANDED GRAPHITE

(30) Priorité: 27.01.2000 FR 0001056
(43) Date de publication de la demande: 30.10.2002
(73) Titulaire: CENTRE NATIONAL DE LA RECHERCHE SCIENTIFIQUE, 75974 Paris (FR)
(72) Inventeur: PY, Xavier, F-66680 Canohes (FR); DAGUERRE, Emmanuel, F-34202 Sete (FR); GOETZ, Vincent, F-66450 Pollestres (FR); SPINNER, Bernard, F-66100 Perpignan (FR)
(74) Mandataire: Sueur, Yvette
(86) Numéro de dépôt international: PCT/FR2001/000243
(87) Numéro de publication internationale: WO 2001/055054

(56) Documents cités:
- EP-A- 0 837 116
- DATABASE CHEMABS [en ligne] CHEMICAL ABSTRACTS SERVICE, COLUMBUS, OHIO, US; IIZUKA, FUMIO ET AL: "Battery cathode" retrieved from STN Database accession no. 104:189784 CA XP002147319 & JP 61 032358 A (PENTEL CO., LTD., JAPAN) 15 février 1986 (1986-02-15)
- DATABASE CHEMABS [en ligne] CHEMICAL ABSTRACTS SERVICE, COLUMBUS, OHIO, US; CENTRAL GLASS CO., LTD., JAPAN: "Carbon active material for batteries" retrieved from STN Database accession no. 103:56831 CA XP002147320 & JP 60 068559 A (CENTRAL GLASS CO., LTD., JAPAN) 19 avril 1985 (1985-04-19)
- M. LOPEZ ET AL.: "Preparation of activated carbon from wood monolith" CARBON, vol. 34, no. 6, 1996, pages 825-827, XP004022312 cité dans la demande

## Description

La présente invention concerne un matériau composite contenant du charbon actif et un procédé pour sa préparation.

Le charbon actif a de très nombreuses et très anciennes applications comme adsorbant carboné. Il est classiquement préparé par un procédé consistant soit à carboniser un précurseur carboné, puis à activer le carbone obtenu à l'aide d'un agent activant physique, soit à activer directement le précurseur carboné à l'aide d'un agent activant chimique, l'étape d'activation étant dans les deux cas accompagnée d'un traitement thermique. Un tel procédé conduit généralement à un produit solide pulvérulent. L'utilisation de charbons actifs pulvérulents comme adsorbant présente cependant de nombreux inconvénients. Le caractère pulvérulent provoque des pertes de charges dans les systèmes ou les procédés dans lesquels le charbon actif est utilisé. En outre, le charbon actif pulvérulent, s'il est utilisé tel quel, a tendance à s'échapper du réacteur dans lequel il est utilisé.

En outre, les charbons actifs de l'art antérieur, ainsi que les lits fixes de charbons actifs, présentent une mauvaise conductivité thermique, ce qui limite leur usage dans de nombreuses applications industrielles.

De très rares précurseurs de charbon actif peuvent être activés de manière uniforme sous forme de grains concassés. Ainsi, M. Lopez, et al., (Preparation of activated carbon from wood monolith, Carbon, 1996, 34/6, 825-827) décrit un procédé consistant à imprégner uniformément un précurseur de carbone (bois, coque d'amande ou de noix de coco, ...) par trempage dans une solution aqueuse à 80°C contenant un agent activant (par exemple H₃PO₄, ZnCl₂) ou directement dans l'acide concentré (H₃PO₄ à 80%). Le précurseur imprégné est ensuite séché et (ou directement) activé à une température de l'ordre de 500°C pendant environ une heure. L'agent activant résiduel est ensuite éliminé par rinçage à l'eau. Le temps nécessaire pour la phase d'imprégnation est cependant très élevé, ce qui limite l'intérêt industriel et économique du procédé. Par ailleurs, l'étape thermique du procédé d'activation induit des gradients cinétiques dans les grains et par conséquent des gradients de texture de l'adsorbant. Les grains ainsi obtenus ne sont donc pas uniformes en propriétés. L'importance du problème augmente avec la dimension des grains.

Différents procédés pour l'élaboration d'un charbon actif sous forme d'un matériau composite macroscopique ont été étudiés. Dans certains procédés de l'art antérieur, on utilise du charbon actif préexistant comme produit de départ. On oeuf citer par exemple le procédé décrit par T.K. Bose, et al.. (US-4,999,330, 1991). Dans ce procédé, des particules de charbon actit superadsorbant sont enrobées par un liant par mise en suspension dans une solution dudit liant dans un solvant, ledit solvant étant ensuite éliminé par évaporation. Le produit restant est comprimé et chauffé. Une partie du liant est décomposée et environ 10% de la porosité du charbon actif est inhibée. Un tel procédé présente divers inconvénients. L'étape d'enrobage du charbon actif par le liant est longue et coûteuse en énergie à cause de l'étape d'évaporation du solvant. En outre, une partie de la porosité du charbon actif est perdue, le pouvoir adsorbant du matériau composite étant ainsi inférieur à celui d'un charbon actif pulvérulent initial. Un autre procédé de cette nature est décrit par S. Follin, ["Approche de Dubinin pour la caractérisation de charbons actifs et évaluation des performances de cycles frigorifiques à adsorption. Application à la production de froid par le couple charbon actif - CO₂", Thèse IMP Université de Perpignan, 1996]. Ce procédé est dérivé du procédé Bose précité, dans la mesure où il consiste à enrober des particules de charbon actif d'un liant à l'aide d'une solution du liant dans en solvant, puis à comprimer après élimination du solvant. L'amélioration apportée réside dans l'addition de graphite naturel expansé au charbon actif enrobé après élimination du solvant et avant compression. La présence de particules de graphite naturel expansé améliore de manière substantielle la conductivité thermique du matériau composite adsorbant obtenu. Toutefois, l'on constate dans ce cas également un perte sensible du pouvoir adsorbant, résultant principalement de la présence du liant. Cette perte peut être de l'ordre de 15 à 30 % suivant le liant utilisé.

Dans d'autres procédés, on prépare le charbon actif lors de l'élaboration du matériau composite. Par exemple, K.P. Gadkaree (Carbon Honeycomb Structures for adsorption applications, Carbon, 1998, 36/7-8, 981-989) décrit un procédé qui consiste à réaliser un support de type nid d'abeille en céramique poreuse extrudée. Ce support est ensuite imprégné par une résine polymérique, par exemple une résine phénolique, de faible viscosité. L'ensemble est ensuite séché, carbonisé et activé, par exemple par carbonisation sous N₂ à 900°C, puis activation sous CO₂ à des taux d'usure de 25 à 30%. Le matériau composite ainsi obtenu forme un continuum et présente une très bonne tenue mécanique. Toutefois, un tel procédé ne peut être appliqué qu'aux précurseurs polymériques. En outre, la teneur en charbon actif et la conductivité thermique du matériau obtenu sont faibles.

Le but de la présente invention est de fournir un matériau composite macroscopique contenant essentiellement du charbon actif et présentant une bonne conductivité thermique, qui peut aisément être mis en forme afin d'être adapté aux différentes utilisations industrielles. Un autre but de l'invention est un procédé pour l'élaboration d'un tel matériau.

Le matériau composite selon l'invention comprend du charbon actif et du graphite expansé. Il est caractérisé en ce que :
- il constitue un bloc au sein duquel le charbon actif est réparti de manière homogène et uniforme sous forme de particules microporeuses ;
- la texture des particules microporeuses est caractérisée par un volume microporeux W₀ compris entre 0,1 cm³g⁻¹ et 1,5 cm³.g⁻¹ et une dimension moyenne des micropores L₀ comprise entre 2 Å et 30 Å ;
- les particules de charbon actif ont sensiblement la même texture, quelle que soit leur localisation dans le matériau composite ;
- les conductivités thermiques du matériau sont comprises entre 1 et 100 Wm⁻¹K⁻¹.

Le matériau composite selon l'invention peut se présenter sous la forme d'une matrice de graphite expansé au sein de laquelle les particules de charbon actif sont uniformément: réparties, ledit matériau étant thermiquement anisotrope. Il peut également se présenter sous la forme d'une dispersion de graphite et de charbon actif l'un dans l'autre, ledit matériau étant alors thermiquement isotrope. Dans tous les cas, la macroporosité du graphite expansé est comprise entre 10 µm et 800 µm. Le rapport en poids charbon actif/graphite expansé dans le matériau de l'invention peut varier dans un trés large intervalle. Il est de préférence compris entre 50% et 99%.

Le matériau composite selon l'invention est obtenu par un procédé qui comprend une étape au cours de laquelle on soumet un agent activant et un mélange de graphite expansé et d'un précurseur de charbon actif à un traitement thermique à une température et pendant une durée suffisantes pour obtenir un taux d'usure ("burn-off") du précurseur de charbon actif compris entre 5 et 70 % en masse. Par taux d'usure, on entend une perce de masse du précurseur de charbon actif lors du traitement thermique.

Le graphite expansé utilisé dans le procédé de la présente invention peut être obtenu par les procédés d'expansion de l'art antérieur. On peut citer par exemple le procédé décrit dans FR-2682370, qui consiste à intercaler un réactif dans un matériau précurseur, puis à soumettre le composé d'insertion obtenu, éventuellement lavé à l'eau et séché, à une élévation brutale de la température (flash thermique). Le départ rapide de l'intercalat s'accompagne d'une expansion (ou exfoliation) unidimensionnelle irréversible de chaque particule de graphite. Comme réactif, on peut utiliser par exemple les mélanges chlorure ferrique-ammoniac ou l'acide sulfurique. Toutefois, les réactifs ayant une décomposition exothermique sont particulièrement avantageux. Parmi ces réactifs ayant une décomposition exothermique, on peut citer l'acide perchlorique, utilisé seul ou en mélange avec l'acide nitrique, ou encore le nitrométhane. La densité apparente du graphite expansé ainsi obtenu est très faible (quelques grammes par dm³ contre 2 kg par dm³ pour le matériau précurseur). Son aire spécifique est de l'ordre de quelques dizaines de m²/g, alors qu'elle est de l'ordre de 1 m²/g pour le matériau précurseur. On préfère tout particulièrement le graphite expansé obtenu à partir de graphite naturel.

Le précurseur de charbon actif est une matière première à fort taux de carbone. A titre d'exemple, on peut citer les brais d'origine quelconque; les matières cellulosiques et les matières polymériques. Comme matériaux cellulosiques, on peut citer par exemple le bois, les coques d'amandes, les coques de noix de coco et la tourbe. Comme matière polymérique, on peut citer les résines phénoliques.

Les brais peuvent être des brais de pétrole, de houille, de pneus, de bois, de pyrolyse sous vide ou de déchets divers. On les utilise de préférence sous forme de brais principalement mésogéniques et partiellement mésophasiques. Un brai principalement mésogénique et partiellement mésophasique contient d'environ 25 à 40% de résine de type α, d'environ 40 à 60% de résine de type β et d'environ 15 à 30% de résine de type γ. Une résine de type α est une résine insoluble dans le toluène et dans la quinoléine, une résine de type β est une résine insoluble dans le toluène et soluble dans la quinoléine, et une résine de type γ est une résine soluble dans le toluène et dans la quinoléine.

Divers procédés peuvent être mis en oeuvre pour obtenir un brai principalement mésogénique et partiellement mésophasique. Selon un premier procédé, on soumet un brai contenant des résines de type γ à un traitement thermique, puis on effectue une extraction sélective par le toluène des résines de type γ non polymérisées. Selon un autre procédé, on soumet un brai contenant des résines de type γ à un traitement thermique, puis on élimine par distillation les résines de type γ non polymérisées. Selon un troisième procédé, on soumet un brai contenant des résines de type γ à un traitement thermique en présence d'un gaz oxydant, par exemple par bullage d'air. De tels procédés sont décrits plus en détail par exemple dans la demande de brevet n° 99.14607.

Le procédé d'élaboration de charbon actif au sein d'un matériau composite contenant du graphite expansé permet d'utiliser comme agent activant des composés qui donnent lieu à des réactions d'activation exothermiques, lesdits composés n'étant pas utilisables dans les procédés de l'art antérieur. La bonne conductivité thermique du graphite expansé permet en effet de maîtriser le caractère exothermique de la réaction d'activation en évacuant la chaleur produite hors du matériau. Ainsi, le précurseur de charbon actif est activé au coeur du matériau composite dans les mêmes conditions qu'à la périphérie du matériau, la texture des grains de charbon actif étant alors sensiblement uniforme dans le matériau.

Le procédé de l'invention peut être mis en oeuvre avec un agent activant chimique liquide, un agent activant chimique pulvérulent, ou un agent activant physique.

Dans une variante du procédé de l'invention, on utilise un agent activant chimique liquide. Le procédé consiste alors à :
- réaliser un mélange uniforme de précurseur de charbon actif, d'agent activant chimique liquide et de graphite expansé divisé et comprimer pour obtenir un bloc consolidé ;
- soumettre le bloc à un traitement thermique à une température entre 350°C et 900°C pendant une durée suffisante pour obtenir un taux d'usure du précurseur de charbon actif entre 5 et 70 % en masse ;
- éliminer l'agent activant résiduel.

L'agent activant chimique liquide est un agent liquide à l'état pur, ou sous forme d'une solution concentrée. L'agent activant peut être par exemple une solution concentrée d'acide fort ou un sel fondu. De même que lors de l'utilisation d'un agent activant sous forme de solide divisé, la proportion d'activant chimique liquide AC par rapport au précurseur de charbon actif PC dans le mélange réactionnel est de préférence telle que 0,5 ≤ AC/PC ≤ 5/1 en poids.

Lorsque le précurseur de charbon actif est un brai, qui est imperméable aux solutions, l'agent activant liquide enrobe les particules de précurseur. On obtient ainsi une pâte constituées de particules de précurseur de charbon actif enrobées par l'agent activant et de particules de graphite expansé.

Lorsque le précurseur de charbon actif est un matériau cellulosique, qui est perméable aux solutions, l'agent activant liquide imprègne les particules de précurseur de charbon actif pour former une pâte constituée de particules de précurseur de charbon actif imprégnées par l'agent activant et de particules de graphite expansé. Dans ce cas, il n'est pas nécessaire de comprimer le mélange particules imprégnées - graphite expansé pour former un bloc.

La taille et le volume de la macroporosité augmentent avec le taux d'agent activant liquide. Ce mode de mise en oeuvre permet de faire varier dans une large mesure les propriétés du charbon actif obtenu au sein du matériau composite en fonction du taux d'agent activant chimique utilisé. Aux faibles taux d'imprégnation ou d'enrobage, on obtient des matériaux ayant les propriétés de charbons actifs à forte sélectivité inhérentes à un faible volume microporeux et une faible dimension moyenne de pores. Aux taux d'imprégnation ou d'enrobage élevés, on obtient des matériaux ayant les propriétés de charbons actifs super adsorbants inhérentes à un volume microporeux élevé et une dimension moyenne de pores élevée. L'originalité liée à l'utilisation d'un agent chimique liquide et d'un matériau cellulosique comme précurseur de charbon actif est l'obtention d'un matériau composite thermiquement isotrope. Un autre avantage réside dans le fait que le mélange obtenu sous forme de pâte avant activation par traitement thermique est modelable et peut donc être mis en forme par simple moulage, sans compression, ou par extrusion. On peut ainsi obtenir aisément des blocs de matériau composite contenant du charbon actif avant des formes très variées. L'élaboration des blocs peut être effectuée en continu.

Dans une autre variante du procédé de l'invention, l'agent activant chimique est sous forme de poudre. Le procédé consiste alors à :
- préparer un mélange uniforme d'un précurseur pulvérulent de charbon actif, de graphite expansé et d'un agent activant chimique divisé que l'on comprime pour former un bloc consolidé ;
- soumettre le bloc consolidé à un traitement thermique sous atmosphère neutre à une température entre 350°C et 600°C, pendant une durée suffisante pour obtenir un taux d'usure du précurseur de charbon actif compris entre 5 et 70 % en masse ;
- éliminer l'activant chimique résiduel.

Lorsque l'agent activant chimique est sous forme de poudre, il est préférable d'utiliser une taille moyenne de grains inférieure ou égale à la taille de la porosité de la matrice consolidée de graphite naturel.

L'agent activant chimique sous forme de solide divisé est choisi dans le groupe constitué par les bases fortes telles que la potasse anhydre ou faiblement hydratée broyée, les acides tels que l'acide phosphorique, et les acides de Lewis. On peut citer en particulier le chlorure de zinc, K₂S, KCNS, NaCl et FeCl₃.

Lorsque l'on utilise un agent activant chimique sous forme de solide divisé, la proportion d'agent activant chimique AC par rapport au précurseur de charbon actif PC dans le mélange réactionnel est de préférence telle que 0,5 ≤ AC/PC ≤ 5/1 en poids. Le volume de la macroporosité du matériau composite obtenu augmente avec le taux d'agent activant chimique, le diamètre moyen de la macroporosité restant constant. Ainsi, la densité apparente du bloc de matériau composite décroît lorsque le taux d'agent activant chimique augmente. Pour les taux d'agent activant chimique les plus élevés, la cohésion du matériau composite diminue, le bloc de matériau composite devenant moins dense et moins résistant. On peut remédier à cet inconvénient en soumettant le bloc de matériau composite obtenu après activation à une compression supplémentaire dans un moule qui peut être celui dans lequel a été effectuée la compression antérieure au traitement thermique d'activation.

L'atmosphère neutre sous laquelle est effectué le traitement thermique est créée dans le milieu réactionnel par l'azote, l'argon ou l'hélium.

Après le traitement thermique, le matériau sous forme de bloc consolidé est soumis à un lavage pour éliminer l'agent activant résiduel, jusqu'à l'obtention d'un liquide de lavage neutre. Le lavage est effectué par un solvant dudit agent activant résiduel. Le solvant est généralement l'eau.

La mise en oeuvre du procédé de l'invention à l'aide d'un agent activant chimique sous forme d'un solide pulvérulent est simple, car elle n'utilise que des poudres. Mais elle ne permet pas d'ajuster les propriétés du matériau composite dans une large gamme par manque d'efficacité du contact entre l'agent activant et la particule de précurseur. Les matériaux composites obtenus ont les propriétés des charbons actifs à forte sélectivité.

Lorsque le procédé de l'invention met en oeuvre un précurseur de charbon actif sous forme de poudre et un agent activant physique, il comprend les étapes suivantes :
- préparation d'un mélange pulvérulent de graphite expansé et de précurseur de charbon actif,
- compression dudit mélange dans un moule pour obtenir un bloc consolidé,
- mise en présence du bloc obtenu consolidé avec l'agent activant physique et traitement thermique.

Le traitement thermique est effectué de préférence à une température comprise entre 800°C et 1100°C, pendant une durée suffisante pour obtenir un taux d'usure du précurseur de charbon actif compris de préférence entre 20 et 70 % en masse.

L'agent activant physique est un gaz, choisi dans le groupe constitué par CO₂, un mélange de CO₂ et de H₂O, un mélange de CO₂ et de gaz inerte, un mélange de CO₂ ou de H₂O dans un gaz inerte, H₂O pur sous forme de vapeur ou dilué dans un gaz vecteur inerte. Le traitement thermique est effectué classiquement à une température comprise entre 800°C et 1100°C, pendant une durée suffisante pour obtenir un taux d'usure du précurseur de charbon actif compris entre 30 et 70 % en masse. Ces matériaux sont moins denses que les matériaux obtenus par activation chimique, mais ils présentent une homogénéisé moindre entre la texture à la périphérie et la texture au centre du bloc de matériau.

Les matériaux composites sous forme de bloc obtenus par les modes de mise en oeuvre du procédé de l'invention, en utilisant soit un agent activant chimique solide finement divisé, soit un agent activant physique, sont des matériaux thermiquement anisotropes. Ils présentent une conductivité thermique radiale λᵣ et une conductivité thermique axiale λₐ. Ceci résulte d'une orientation partielle des plans de graphite expansé lors de la compression du mélange de poudres. En général, λₐ est presque indépendant de la densité de la matrice de graphite expansé, alors que est très sensible à ce paramètre. La conductivité thermique radiale λᵣ est toujours très nettement supérieure à la conductivité thermique axiale λₐ. Cette propriété est particulièrement intéressante dans les procédés dans lesquels le matériau est utilisé sous forme d'un bloc cylindrique, notamment comme garnissage d'une colonne cylindrique, lorsque l'on souhaite un bon transfert thermique entre le garnissage et la paroi de la colonne et une limitation de toute forme de dispersion axiale.

Il apparais ainsi que le procédé de l'invention, consistant à préparer le charbon actif par activation d'un précurseur au sein d'un matériau composite contenant du graphite expansé, permet d'obtenir un adsorbant sous forme d'un bloc consolidé, supprimant ainsi les inconvénients liés à l'utilisation classique de charbon actif pulvérulent. Le procédé respecte la porosité du charbon actif et les mesures effectuées ont montré que la microporosité du charbon actif au sein du matériau composite était identique à celle du charbon actif pulvérulent qui aurait été obtenu à partir du même précurseur. Lors de l'utilisation du matériau composite comme adsorbant, les performances ne sont pas diminuées, du fait que l'accessibilité des pores aux fluides n'est pas diminuée par le procédé d'élaboration. Au contraire, on observe une accélération des processus d'adsorption/désorption due à l'action du graphite expansé sur les chaleurs correspondantes. La présence de graphite expansé présente un avantage supplémentaire du fait de sa bonne conductivité thermique qui compense la faible conductivité thermique du charbon actif. En effet, la plupart des applications des charbons actifs génèrent des effets thermiques dont l'élimination est souhaitée, et cette élimination est fortement favorisée par la présence du graphique expansé.

Enfin, le procédé d'élaboration permet d'obtenir le matériau composite sous une forme directement adaptée à l'application à laquelle il est destiné. Pour l'étape d'activation par traitement thermique, le mélange de précurseur de charbon actif et de graphite expansé peut être introduit dans un moule qui a la forme souhaitée pour l'application du matériau. A titre d'exemple, on peut citer les disques perforés utilisés comme adsorbants pour les réacteurs de stockage de gaz tels que H₂, CH₄ ou CO₂ ou pour les machines thermiques, des matériaux adsorbants sous forme de cylindres pour les échangeurs, des éléments ayant une forme particulière pour des garnissages structurés destinés au traitement de fluides ou à des réactions catalytiques hétérogènes. La recompression supplémentaire facultative permet d'ajuster la forme, la porosité et la densité du bloc de matériau composite. En général, le bloc de matériau composite obtenu conserve la forme imposée par le moule dans lequel sont effectués la première compression et le traitement thermique d'activation. Lorsque la tenue mécanique obtenue après activation n'est pas satisfaisante, on effectue une remise en forme du bloc dans le moule initial. Cette remise en forme permet en outre de contrôler la densité du bloc de matériau composite. Par exemple, un bloc de forme cubique non recomprimé ayant une densité initiale apparente d'environ 100 kg.m⁻³ peut être densifié à 410 kg.m⁻³ par une recompression sous une pression de 200 bar. Cette recompression conduit en même temps à une diminution de la macroporosité et un optimum peut être défini pour ajuster les caractéristiques de chaque matériau à l'application à laquelle il est destiné. L'action adsorbante du matériau est orientée par le choix de la microporosité du charbon actif présent au sein du matériau composite. La conductivité thermique du matériau est orientée par le choix de la densité du graphite expansé. Les performances en terme de transport de matière sont déterminées par la perméabilité du matériau composite, par le retrait post-activation de l'agent activant (lorsqu'il s'agit d'un agent chimique), et par le taux de recompression éventuel du bloc de matériau composite après le traitement thermique d'activation. Les propriétés hydrodynamiques sont imposées par la mise en forme du matériau et déterminent le transfert de matière et de chaleur entre le fluide et le bloc lors de son utilisation.

La présente invention est décrite plus en détail à l'aide des exemples suivants, qui sont donnés à titre d'illustration, mais auxquels l'invention n'est pas limitée.

### Exemple 1

### Préparation d'un composite de charbon actif et de graphite naturel expansé à partir de brai de houille, par enrobage par la potasse

On a utilisé un brai de houille évolué, c'est-à-dire un brai de houille pour lequel le taux de résines β a été augmenté par un traitement thermique accompagné d'une oxydation partielle par bullage réactif. Ledit brai de houille évolué a été broyé en particules dont la taille est comprise entre 50 µm et 200 µm. Les particules de brai ont ensuite été mises en suspension dans une solution aqueuse de potasse contenant le minimum d'eau, c'est-à-dire dans le cas présent, dans une solution à 54,7 % en poids (correspondant à la solubilité limite de KOH dans l'eau à 80°C). La suspension ainsi obtenue a été chauffée à 80°C et agitée jusqu'à évaporation totale de l'eau. On a ainsi obtenu une poudre anhydre, que l'on a broyée pour obtenir des particules de brai enrobées de potasse ayant une dimension inférieure à 250 µm.

Différents essais ont été effectués en utilisant différents rapports massiques potasse/brai, compris entre 0,5/1 et 5/1, les autres conditions étant identiques.

La poudre de brai imprégné ce potasse a ensuite été mélangée avec du Graphite naturel expansé (GNE), le rapport en poids brai/GNE étant de 6/1. Le mélange obtenu a été introduit dans un moule et mis sous forme d'un parallélépipède (2,5 x 2,5 x 0,5 cm) sous une pression de 100 bar. Le bloc de charbon activable ainsi obtenu a été placé dans une cellule en nickel, porté à une température de 800°C sous atmosphère inerte d'azote à une vitesse de 10°C/min, et maintenu à cette température pendant deux heures. Après refroidissement, le bloc (constitué de particules de charbon actif distribuées au sein d'une matrice de graphite naturel expansé) a été rincé à l'eau jusqu'à obtention d'une eau de rinçage neutre, afin d'éliminer le résidu d'agent activant puis séché à l'étuve à 120°C

### Exemple 2

### Préparation d'un composite de charbon actif et de graphite naturel expansé, à partir de brai de houille, par mélange solide - solide)

On a reproduit le mode opératoire de l'exemple 1, mais en mettant le brai en contact avec la potasse par mélange de la poudre de brai avec de la potasse anhydre broyée ayant une granulométrie voisine de 100 µm. Les autres étapes du procédé sont identiques à celles de l'exemple 1.

### Exemple 3

### Préparation d'un composite de charbon actif et de graphite expansé à partir d'un résidu cellulosique

On a broyé 3 g de résidu cellulosique constitué de coque d'amandes séchées pour obtenir des particules ayant un diamètre inférieur à 225 µm. Les particules obtenues ont été mises en suspension dans une solution aqueuse de ZnCl₂ à 700 g/l et la suspension a été portée à une température de 80°C et maintenue à cette température pendant 21 heures sous agitation.

Après filtration et séchage à 120°C, la poudre imprégnée récupérée a été mélangée avec du graphite naturel expansé GNE dans des proportions massiques poudre imprégnée/GNE de 7/1. Le mélange de poudres a été comprimé dans un moule sous une pression de 80 bar et l'on a obtenu un bloc consolidé. On a porté le bloc sous atmosphère inerte à une température de 600°C. à une vitesse de 4°C/min et on l'a maintenu à cette température pendant 5 heures. Après refroidissement, rinçage à l'eau et séchage, on a obtenu un bloc adsorbant ayant un taux massique de charbon actif de 57%, ledit charbon actif présentant les propriétés d'un superadsorbant (W₀ = 1,23 cm³.g⁻¹, L₀ = 27 Å ; S_{BET} = 1700 m²/g) .

### Exemple 4

### Préparation d'un composite à partir de bois de pin

On a mélangé de la sciure de bois de pin avec de l'acide phosphorique à 85% et du GNE. Le mélange a ensuite été soumis à un traitement thermique dans un four tubulaire sous balayage d'air à 80°C pendant 3 heures, puis 170°C pendant 1 heure, et 480°C pendant 30 min.

Le matériau composite obtenu contient 84% en masse de charbon actif qui a les caractéristiques suivantes : W₀ = 0,42 cm³.g⁻¹, L₀ = 14,6 Å ; S_{BEET} = 1208 m²/g.

Ce matériau présente une isotropie thermique particulièrement intéressante pour les procédés qui nécessitent une bonne conductivité thermique et une bonne perméabilité dans toutes les directions, comme par exemple le stockage de gaz.

### Exemple 5

### Caractérisation des matériaux obtenus par les procédés des exemples 1 et 2

On a déterminé le volume microporeux et la taille des micropores du charbon actif présent au sein du matériau composite obtenu dans les différents essais des exemples 1 et 2. On a également déterminé la distribution de la taille des macropores de la matrice GNE, dans les différents matériaux composites obtenus. On a en outre déterminé la distribution de la dimension moyenne des macropores de la matrice GNE pour les blocs préparés respectivement selon les exemples 1 et 2.

Le volume microporeux des particules de charbon actif et la dimensions moyenne des micropores des particules de charbon actif ont été déterminés par la méthode standard sur l'appareil ASAP-2000 de la société Micromeritics, par isotherme à l'azote et à 77 K.

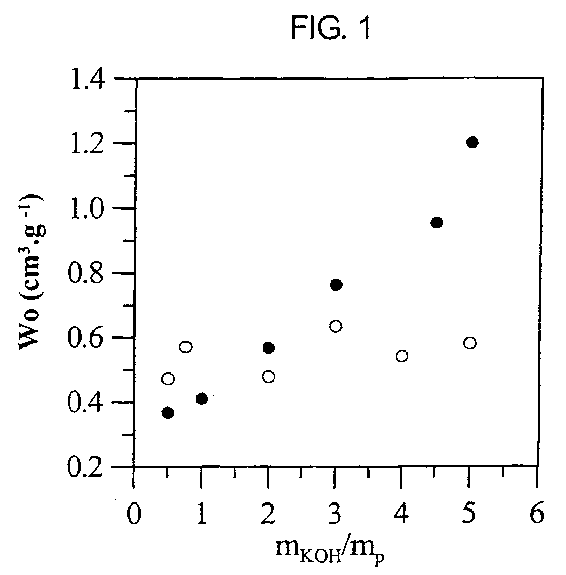

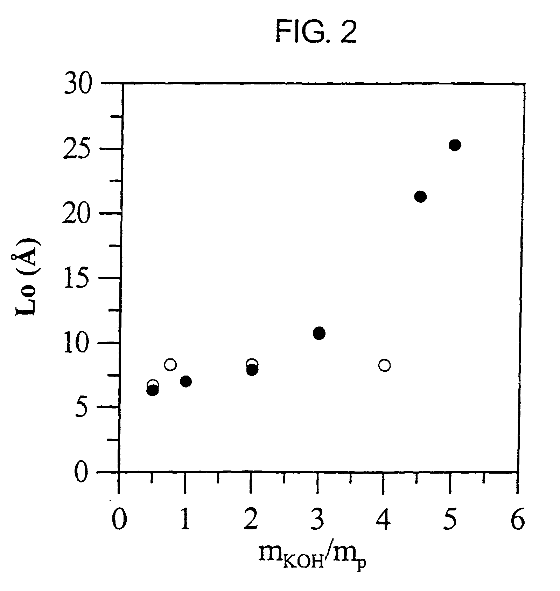

La figure 1 représente l'évolution du volume microporeux W₀ (exprimé en cm³g⁻¹) du charbon actif présent dans le matériau composite, en fonction du taux massique initial de potasse (en masse de potasse m_{KOH} sur masse de précurseur m_{P}). La figure 2 représente l'évolution de la dimension moyenne des micropores L₀ (exprimée en Å) du charbon actif en fonction du taux de potasse. Sur les deux figures, les valeurs représentées par ● correspondent aux matériaux de l'exemple 1, et les valeurs représentées par ○ correspondent aux matériaux de l'exemple 2.

Il apparaît que le volume microporeux du charbon actif. varie dans un domaine de 0,5 cm³g⁻¹ à 1,2 cm³g⁻¹ et la dimension moyenne des micropores dans un domaine de 5 Å à 25 Å. L'on note que, lorsque l'activant et le brai sont mis en contact par la technique solide - solide, quel que soit le taux d'agent activant, les valeurs de volume microporeux et de dimension de micropores restent dans le domaine des charbons actifs à forte sélectivité utilisés notamment comme tamis moléculaires carbonés (faible volume poreux et faible dimension de micropores, par exemple 0,5 cm³g⁻¹, 5 Å). En revanche, la technique d'enrobage du brai par une solution aqueuse de potasse permet d'élaborer aussi bien des matériaux à forte sélectivité (pour les taux d'imprégnation les plus faibles) que des matériaux du type super-adsorbant ayant un volume microporeux et une dimension moyenne de micropores plus élevés (par exemple 1,2 cm³.g⁻¹, 25 Å).

La dimension moyenne des macropores de la matrice GNE a été déterminée à l'aide d'un porosimètre à mercure.

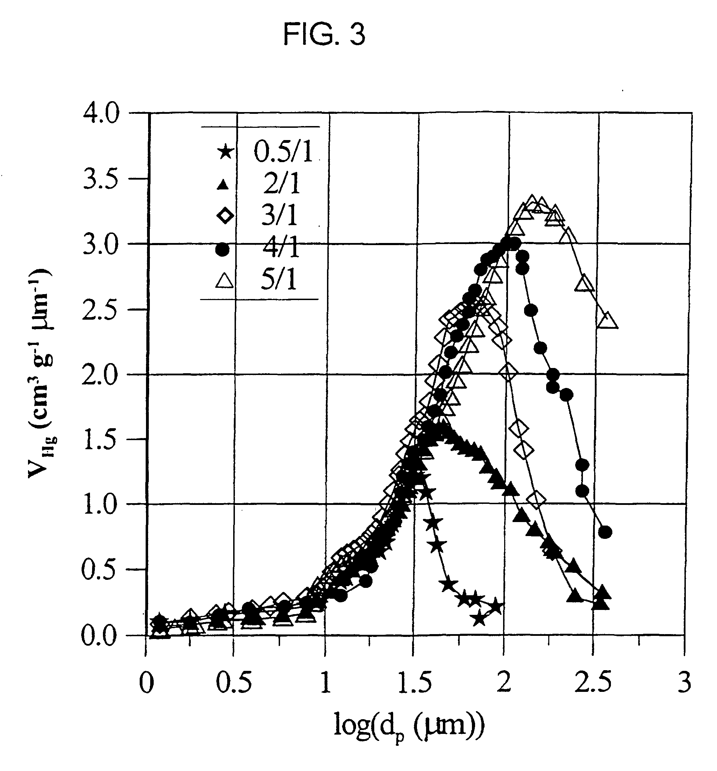

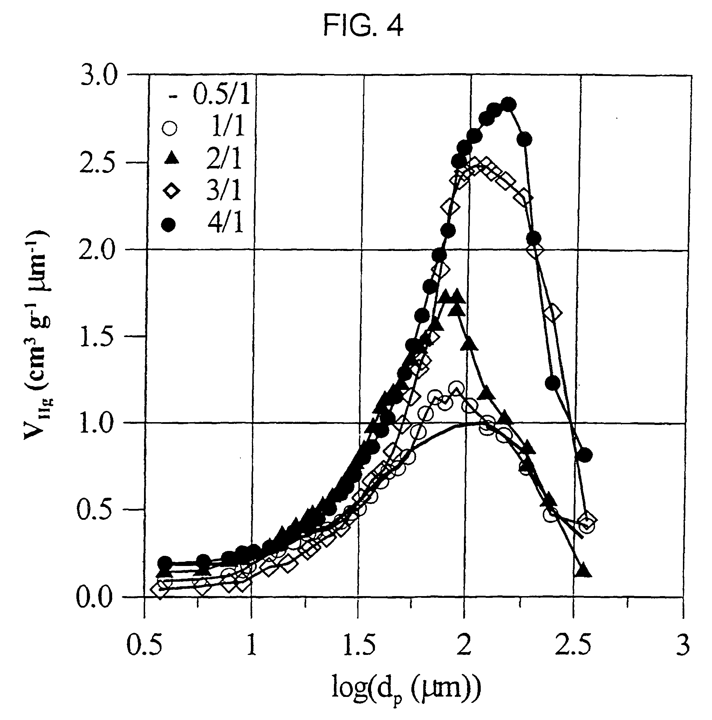

La figure 3 représente la distribution de la taille des macropores V_{Hg} dans les blocs obtenus selon l'exemple 1, exprimée en volume d'intrusion de Hg (cm³/g/µm), en fonction de la taille des pores dₚ (exprimée en µm). De même, la figure 4 représente la taille moyenne des macropores des blocs selon l'exemple 2.
Sur la figure 3, les courbes correspondent à des taux d'imprégnation KOH/brai différents, variant entre 5/1 et 0,5/1. Ainsi :
- la courbe Δ représente un taux de 5/1
- la courbe ● représente un taux de 4/1
- la courbe ◇ représente un taux de 3/1
- la courbe ▲ représente un taux de 2/1
- la courbe 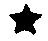 représente un taux de 0,5/1
Sur la figure 4, les courbes correspondent à des taux d'imprégnation KOH/brai différents, variant entre 4/1 et 0,5/1. Ainsi :
- la courbe ● représente un taux de 4/1
- la courbe ◇ représente un taux de 3/1
- la courbe ▲ représente un taux de 2/1
- la courbe ○ représente un taux de 1/1
- la courbe - représente un taux de 0,5/1

Il apparaît que la taille moyenne des macropores des blocs est imposée par les dimensions des poudres utilisées et varie entre 50 µm et 200 µm. Il apparaît également que le volume macroporeux augmente avec le rapport agent activant / brai. Ainsi, la densité apparente des blocs décroît lorsque le taux d'agent activant utilisé pendant l'activation augmente. Cette densité apparente varie entre 100 et 450 kg.m⁻³ lorsque le rapport potasse/brai passe de 5/1 à 1/1.

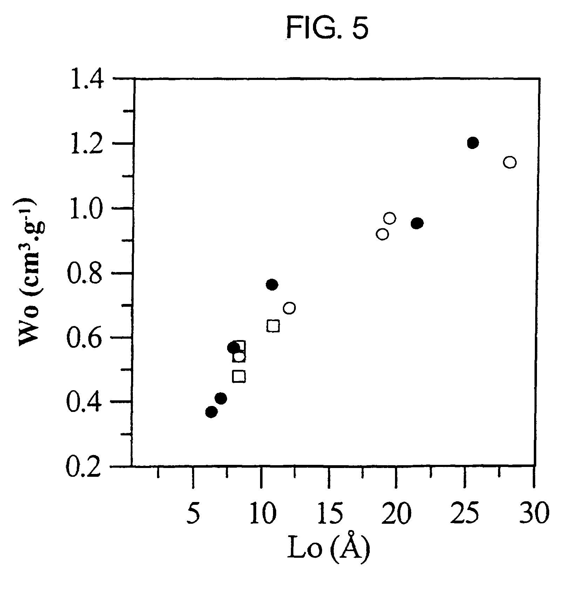

L'évolution de la microporosité des charbons actifs par activation par la potasse au sein d'une matrice de graphite naturel expansé a été comparée à celle d'un charbon actif sans matrice. La figure 5 représente la variation du volume microporeux W₀ (en cm³g⁻¹) en fonction de la taille des micropores L₀ (en Å) pour un charbon actif pulvérulent sans matrice de graphite expansé (●), pour un charbon actif au sein d'une matrice de graphite expansé selon l'exemple 1 (○) et pour un charbon actif au sein d'une matrice de graphite expansé selon l'exemple 2 (□). Cette figure montre que, quelle que soit la technique choisie, les produits obtenus présentent les mêmes propriétés d'adsorbant, l'évolution de leurs propriétés de microporosité décrivant une courbe unique. Le charbon activé au sein d'une matrice de graphite naturel expansé présente des propriétés similaires à celles d'un charbon actif de l'art antérieur. Il est ainsi montré que le fait d'activer le charbon au sein de la matrice de graphite expansé ne perturbe pas le processus de transformation du précurseur carboné en matériau adsorbant. La texture d'une particule de charbon actif au sein du matériau composite reste inchangée, que la particule soit située au centre du bloc de matériau composite ou à sa périphérie.

## Revendications

1. Procédé de préparation d'un matériau composite qui comprend du charbon actif et du graphite expansé constituant un bloc au sein duquel le charbon actif est réparti de manière homogène et uniforme sous forme de particules microporeuses et dans lequel :
- la texture des particules microporeuses est **caractérisée par** un volume microporeux W₀ compris entre 0,1 cm³.g⁻¹ et 1,5 cm³.g⁻¹ et une dimension moyenne des micropores L₀ comprise entre 2 Å et 30 Å ;
- les particules de charbon actif ont sensiblement la même texture, quelle que soit leur localisation dans le matériau composite ;
- les conductivités thermiques du matériau sont comprises entre 1 et 100 Wm⁻¹K⁻¹,
ledit procédé étant **caractérisé en ce qu'**il comprend une étape au cours de laquelle on soumet un agent activant et un mélange de graphite expansé et d'un précurseur de charbon actif à un traitement thermique à une température et pendant une durée suffisantes pour obtenir un taux d'usure du précurseur de charbon actif compris entre 5 et 70 % en masse.

2. Procédé selon la revendication 1, **caractérisé en ce que** le précurseur de charbon actif est un brai ou une matière cellulosique ou polymérique

3. Procédé selon la revendication 2, **caractérisé en ce que** la matière cellulosique est le bois, les coques d'amandes, les coques de noix de coco, la tourbe.

4. Procédé selon la revendication 2, **caractérisé en ce que** le brai est un brai principalement mésogénique et partiellement mésophasique.

5. Procédé selon la revendication 1, **caractérisé en ce que** l'agent activant est un agent activant chimique sous forme de solide divisé.

6. Procédé selon la revendication 5, **caractérisé en ce qu'**il consiste à :
- préparer un mélange uniforme d'un précurseur pulvérulent de charbon actif, de graphite expansé et d'un agent activant chimique divisé que l'on comprime pour former un bloc consolidé ;
- soumettre le bloc consolidé à un traitement thermique sous atmosphère neutre à une température entre 350°C et 600°C, pendant une durée suffisante pour obtenir un taux d'usure du précurseur de charbon actif compris entre 5 et 70 % en masse ;
- éliminer l'activant chimique résiduel.

7. Procédé selon la revendication 5, **caractérisé en ce que** l'agent activant chimique est choisi dans le groupe constitué par les bases fortes, l'acide phosphorique et les acides de Lewis.

8. Procédé selon la revendication 1, **caractérisé en ce que** l'agent activant est un agent chimique AC, dont la proportion par rapport au précurseur de charbon actif PC dans le mélange réactionnel est telle que 0,5 ≤ AC/PC ≤ 5/1 en poids.

9. Procédé selon la revendication 1, **caractérisé en ce que** l'agent activant est un agent chimique sous forme de liquide.

10. Procédé selon la revendication 9, **caractérisé en ce qu'**il consiste à :
- réaliser un mélange uniforme de précurseur de charbon actif et d'agent activant chimique liquide et de graphite expansé divisé et comprimer pour obtenir un bloc consolidé ;
- soumettre le bloc à un traitement thermique à une température entre 350°C et 900°C pendant une durée suffisante pour obtenir un taux d'usure du précurseur de charbon actif entre 5 et 70 % en masse ;
- éliminer l'agent activant résiduel.

11. Procédé selon la revendication 9, **caractérisé en ce que** l'agent activant chimique liquide est un agent liquide à l'état pur, ou sous forme d'une solution concentrée.

12. Procédé selon la revendication 11, **caractérisé en ce que** l'agent activant liquide est une solution concentrée d'acide ou un sel fondu.

13. Procédé selon la revendication 1, **caractérisé en ce que** l'agent activant est un agent physique.

14. Procédé selon la revendication 13, **caractérisé en ce que** l'agent activant physique est un gaz, choisi dans le groupe constitué par CO₂, un mélange de CO₂ et de H₂O un mélange de CO₂ et de gaz inerte, un mélange de CO₂ ou de H₂O dans un gaz inerte, H₂O pur sous forme de vapeur ou dilué dans un gaz vecteur inerte.

15. Procédé selon la revendication 13, **caractérisé en ce qu'**il comprend les étapes suivantes :
- préparation d'un mélange pulvérulent de graphite expansé et de précurseur de charbon actif,
- compression dudit mélange dans un moule pour obtenir un bloc consolidé,
- mise en présence du bloc obtenu consolidé avec l'agent activant physique et traitement thermique à une température comprise entre 800°C et 1100°C, pendant une durée suffisante pour obtenir un taux d'usure du précurseur de charbon actif compris entre 30 et 70 % en masse.

## Patentansprüche

1. Verfahren zur Herstellung eines Verbundwerkstoffs, der Aktivkohle und expandierten Graphit enthält und als Block vorliegt, in dessen Inneren die Aktivkohle in Form von mikroporösen Teilchen homogen und gleichmäßig verteilt ist und worin:
- die Struktur der mikroporösen Teilchen durch ein Mikroporenvolumen W₀ von 0,1 cm³.g⁻¹ bis 1,5 cm³.g⁻¹ und einen mittleren Durchmesser der Mikroporen L₀ von 2 Å bis 30 Å **gekennzeichnet** ist;
- die Aktivkohleteilchen unabhängig von ihrer Position im Verbundwerkstoff im Wesentlichen die gleiche Struktur aufweisen;
- die spezifische Wärmeleitfähigkeit des Werkstoffs 1 bis 100 Wm⁻¹K⁻¹ beträgt,
wobei das Verfahren **dadurch gekennzeichnet ist, dass** es einen Schritt umfasst, bei dem ein Aktivator und ein Gemisch aus expandiertem Graphit und einem Aktivkohlevorläufer einer Wärmebehandlung unterzogen werden, und zwar bei einer Temperatur und über einen ausreichend langen Zeitraum, um eine Verbrauchsrate des Aktivkohlevorläufers von 5 bis 70 Gew.-% zu erzielen.

2. Verfahren nach Anspruch 1, **dadurch gekennzeichnet, dass** der Aktivkohlevorläufer Pech oder ein Cellulose- oder Polymermaterial ist.

3. Verfahren nach Anspruch 2, **dadurch gekennzeichnet, dass** das Cellulosematerial Holz, Mandelschalen, Kokosnussschalen oder Torf ist.

4. Verfahren nach Anspruch 2, **dadurch gekennzeichnet, dass** das Pech hauptsächlich mesogenes und teilweise mesophasiges Pech ist.

5. Verfahren nach Anspruch 1, **dadurch gekennzeichnet, dass** der Aktivator ein chemischer Aktivator in Form eines verteilten Feststoffs ist.

6. Verfahren nach Anspruch 5, **dadurch gekennzeichnet, dass** es folgende Schritte umfasst:
- Herstellung eines gleichförmigen Gemischs aus einem pulverförmigen Aktivkohlevorläufer, expandiertem Graphit und einem verteilten chemischen Aktivator, das gepresst wird, um einen kompaktierten Block zu bilden;
- Wärmebehandlung des kompaktierten Blocks in neutraler Atmosphäre bei einer Temperatur zwischen 350 °C und 600 °C und über einen ausreichend langen Zeitraum, um eine Verbrauchsrate des Aktivkohlevorläufers von 5 bis 70 Gew.-% zu erzielen;
- Entfernung des restlichen chemischen Aktivators.

7. Verfahren nach Anspruch 5, **dadurch gekennzeichnet, dass** der chemische Aktivator aus der aus starken Basen, Phosphorsäure und Lewis-Säuren bestehenden Gruppe ausgewählt ist.

8. Verfahren nach Anspruch 1, **dadurch gekennzeichnet, dass** der Aktivator ein chemisches Mittel CM ist, dessen Gewichtsanteil im Gemisch, bezogen auf den Aktivkohlevorläufer AV, 0,5 ≤ CM/AV ≤ 5:1 beträgt.

9. Verfahren nach Anspruch 1, **dadurch gekennzeichnet, dass** der Aktivator ein chemisches Mittel in flüssiger Form ist.

10. Verfahren nach Anspruch 9, **dadurch gekennzeichnet, dass** es folgende Schritte umfasst:
- Herstellung eines gleichförmigen Gemischs aus einem Aktivkohlevorläufer, einem flüssigen chemischen Aktivator und verteiltem expandiertem Graphit und Pressen desselben, um einen kompaktierten Block zu erhalten;
- Wärmebehandlung des Blocks bei einer Temperatur zwischen 350 °C und 900 °C und über einen ausreichend langen Zeitraum, um eine Verbrauchsrate des Aktivkohlevorläufers von 5 bis 70 Gew.-% zu erzielen;
- Entfernung des restlichen chemischen Aktivators.

11. Verfahren nach Anspruch 9, **dadurch gekennzeichnet, dass** der flüssige chemische Aktivator ein flüssiges Mittel in reinem Zustand oder in Form einer konzentrierten Lösung ist.

12. Verfahren nach Anspruch 11, **dadurch gekennzeichnet, dass** der flüssige Aktivator eine konzentrierte Lösung einer Säure oder eine Salzschmelze ist,

13. Verfahren nach Anspruch 1, **dadurch gekennzeichnet, dass** der Aktivator ein physikalisches Mittel ist.

14. Verfahren nach Anspruch 13, **dadurch gekennzeichnet, dass** der physikalische Aktivator ein Gas ist, das aus der aus CO₂, einem Gemisch aus CO₂ und H₂O, einem Gemisch aus CO₂ und Inertgas, einem Gemisch aus CO₂ oder H₂O in einem Inertgas, reinem H₂O in Dampfform und in einem inerten Trägergas verdünntem H₂O bestehenden Gruppe ausgewählt ist.

15. Verfahren nach Anspruch 13, **dadurch gekennzeichnet, dass** es die folgenden Schritte umfasst:
- Herstellung eines pulverförmigen Gemischs aus expandiertem Graphit und einem Aktivkohlevorläufer;
- Pressen des Gemischs in einer Form, um einen kompaktierten Block zu erhalten;
- Kontaktieren des erhaltenen kompaktierten Blocks mit einem physikalischen Aktivator und Wärmebehandlung bei einer Temperatur von 800 °C bis 1.100 °C und über einen ausreichend langen Zeitraum, um eine Verbrauchsrate des Aktivkohlevorläufers von 30 bis 70 Gew.-% zu erzielen.

## Claims

1. A process for the preparation of a composite material comprising activated carbon and expanded graphite, which constitutes a block within which the activated carbon is distributed homogeneously and uniformly in the form of microporous particles and wherein :
- the texture of the microporous particles is **characterized by** a micropore volume W₀ of between 0.1 cm³.g⁻¹ and 1.5 cm³.g⁻¹ and a mean size of the micropores L₀ of between 2 Å and 30 Å ;
- the particles of activated carbon have substantially the same texture, whatever their location in the composite material ;
- the thermal conductivities of the material are between 1 and 100 Wm⁻¹K⁻¹;
wherein said process comprises a stage during which an activating agent and a mixture of expanded graphite and of an activated carbon precursor are subjected to a heat treatment at a temperature and for a time sufficient to produce a burn off of the activated carbon precursor of between 5 and 70% by mass.

2. The process as claimed in claim 1, **characterized in that** the activated carbon precursor is a pitch, a cellulose material or a polymeric material.

3. The process as claimed in claim 2, **characterized in that** the cellulose material is wood, almond shells, coconut shells or peat.

4. The process as claimed in claim 2, **characterized in that** the pitch is a mainly mesogenic and partially mesophase pitch.

5. The process as claimed in claim 1, **characterized in that** the activating agent is a chemical activating agent in the form of a divided solid.

6. The process as claimed in claim 5, **characterized in that** it consists in :
- preparing a uniform mixture of an activated carbon pulverulent precursor, of expanded graphite and of a divided chemical activating agent, which mixture is compressed to form a consolidated block ;
- subjecting the consolidated block to a heat treatment under a neutral atmosphere at a temperature between 350°C and 600°C for a time sufficient to produce a burn off of the activated carbon precursor of between 5 and 70% by mass ;
- removing the residual chemical activating agent.

7. The process as claimed in claim 5, **characterized in that** the chemical activating agent is chosen from the group consisting of strong bases, phosphoric acid and Lewis acids.

8. The process as claimed in claim 1, **characterized in that** the activating agent is a chemical agent CA, the proportion of which with respect to the activated carbon precursor CP in the reaction mixture is such that 0.5 ≤ CA/CP ≤ 5/1 by weight.

9. The process as claimed in claim 1, **characterized in that** the activating agent is a chemical agent in the form of a liquid.

10. The process as claimed in claim 9, **characterized in that** it consists in :
- producing a uniform mixture of activated carbon precursor and of liquid chemical activating agent and of divided expanded graphite in compressing in order to produce a consolidated block ;
- subjecting the block to a heat treatment at a temperature of between 350°C and 900°C for a period of time sufficient to produce a burn off of the activated carbon precursor between 5 and 70% by mass ;
- removing the residual activating agent.

11. The process as claimed in claim 9, **characterized in that** the liquid chemical activating agent is a liquid agent in the pure state or a liquid agent in the form of a concentrated solution.

12. The process as claimed in claim 11, **characterized in that** the liquid activating agent is a concentrated solution of acid or a molten salt.

13. The process as claimed in claim 1, **characterized in that** the activating agent is a physical agent.

14. The process as claimed in claim 13, **characterized in that** the physical activating agent is a gas chosen from the group consisting of CO₂ a mixture of CO₂ and of H₂O, a mixture of CO₂ and of inert gas, a mixture of CO₂ or of H₂O in an inert gas, pure H₂O in the form of steam or H₂O diluted in an inert carrier gas.

15. The process as claimed in claim 13, **characterized in that** it comprises the following stages :
- preparation of a pulverulent mixture of expanded graphite and of activated carbon precursor,
- compression of said mixture in a mold to produce a consolidated block,
- bringing the consolidated block obtained into contact with the physical activating agent and heat treatment at a temperature of between 800°C and 1 100°C for a time sufficient to produce a burn off of the activated carbon precursor of between 30 and 70% by mass.
